# EUROPEAN PATENT SPECIFICATION

(11) **EP 2 586 602 B1**
(45) Date of publication and mention of the grant of the patent: **17.10.2018**
(21) Application number: 10854182.2
(22) Date of filing: 28.06.2010
(51) Int. Cl.: B29D 23/00, B29C 47/04, B29C 47/78, B29C 67/20, B32B 37/15, B29C 47/00, B29C 47/02, B29C 47/06, B29C 44/32, B29C 47/90, B29C 47/88, B29C 47/86, B29C 47/10, F16L 59/153

(54) **METHOD FOR MANUFACTURING A THERMALLY INSULATED FLEXIBLE TUBE**
VERFAHREN ZUR HERSTELLUNG EINES WÄRMEISOLIERTEN FLEXIBLEN SCHLAUCHS
PROCÉDÉ DE FABRICATION D'UN TUBE FLEXIBLE À ISOLATION THERMIQUE

(43) Date of publication of application: 01.05.2013
(73) Proprietor: Obschestvo S Ogranichennoy Otvetstvennostiyu "Smit-Yartsevo", Smolenskaya obl. 215801 (RU)
(72) Inventor: NARKEVICH, Sergey Leonidovich, Mogilev 212030 (BY); PAVLYUK, Evgeniy Sergeevich, Mogilev 212030 (BY)
(74) Representative: Sloboshanin, Sergej
(86) International application number: PCT/RU2010/000363
(87) International publication number: WO 2012/002834

(56) References cited:
- EP-A1- 0 897 788
- WO-A1-00/35657
- WO-A1-84/03066
- DE-A1- 2 803 708
- DE-A1- 3 216 463
- GB-A- 1 167 844
- GB-A- 1 482 661
- GB-A- 1 482 661
- JP-A- S5 242 567
- SU-A3- 1 565 342
- US-A- 4 108 703
- US-A- 5 658 519

## Description

### Technical field to which the invention pertains

The invention pertains to the field of manufacturing preliminarily insulated flexible tubes applied in the field of thermal energy, in building heat networks, networks for hot and cold water supply and the like. More specifically, the present invention is defined by a method for manufacturing a thermally insulated flexible tube according to claim 1.

### Prior art

Several methods for manufacturing thermally insulated tubes are known from the prior art: DE 3126505, DE3724360, DE 10312700, DE 19629678, DE 3717020, DE 3724360, EP 0038974, DE 19629678, EP 01566587, EP 1612468, EP 2060843, EP 2138751, EP 1010933, FR 2578026, JP 58020424, JP 2002323194, JP 58020425, JP 58076235, SU 1449025, RU 2265517, RU 2289751, RU 2293247, RU 2320484, RU 2339869, RU 2355941, RU 2372551, RU 11585 U1, RU 2052706, RU 2280809, RU 96123112, RU 2003117471, RU 2004139112, US 4844762, US 4929409, WO 0035657, WO 0207948, WO 0231400, WO 0047387. These methods and the devices for their implementation are rather complex, require special equipment and presuppose the manufacture of the thermally insulated tubes in a number of successive technical steps.

WO 84/03066 A1 discloses a procedure for manufacturing a tube of insulating material comprising an inner tube, a foamed plastic insulation and a plastic surface layer, wherein the foaming material is conducted to encircle the inner tube, and similarly plastic raw material to form the surface layer, and around the inner tube are formed the foamed plastic insulation and the surface layer simultaneously in one work step, wherein the surface layer is cooled to desired dimension in a calibration means in which a calibration pressure is produced by the foaming process.

DE 28 03 708 discloses an apparatus for producing a flexible, laminated insulating pipe composed of a smooth inner pipe, a thermoplastics outer pipe and a layer of plastics foam insulation between the pipes. The apparatus comprises (a) first and second extruders for the thermoplastics material and insulating foam; (b) a coextrusion head; (c) a pipe forming machine comprising a moving hollow mould in which the laminated pipe is finally formed; and (d) a pusher device for feeding in the smooth inner pipe (1), wherein the pipe forming machine is adapted to provide a wavy surface for the outer pipe.

In particular, a method for manufacturing a thermally insulated tube is known according to European Patent application EP 0897788, published February 24, 1999. In a first step of the implementation of said method, the working tube and the insulating materials are supplied into a membrane-type sleeve, forming and structuring an insulation on the working tube in a corrugator. In a second step, the outer tube is extruded over the insulation formed.

The shortcoming of this method lies in the multiplicity of steps of the process, the requirement of labour and energy and the increased amount of material needed due to the use of additional materials (in this case the membrane-type sleeve).

As the prior art most pertinent to this invention in terms of all features, the technical solution was chosen which is described in international application WO 0035657, published June 22, 2000.

Application WO 0035657 describes a method and a device for applying a thermal insulation on a long-dimensioned tube facilitating the manufacture of a flexible thermally insulated tube by means of a one-step process without using centering elements for the working tube with regard to the outer tubular casing and without using a membrane-type sleeve.

According to the method of the most pertinent prior art, the long-dimensioned tube is guided into an extruder which simultaneously extrudes the foaming thermally insulating material and the outer protective cover (tube).

The extrusion head of the extruder comprises a first opening, from which the
compound for forming the outer protective tubular casing around the tube is extruded, and a second opening, from which the foaming thermally insulating material is extruded. The temperature of the compound for the protective tubular casing is approximately 148,9°C-204,4°C (300-400°F), while the foaming thermally insulating material must have room temperature. The foaming thermally insulating material and the compound for the protective tubular casing are inserted under pressure through corresponding dies. The dies are preferably cylindrical, which corresponds to the shape of the tube. After the simultaneous extrusion of the foaming thermally insulating material and the protective compound for the protective tubular casing, the conditions for a quick hardening of the material of the protective tubular casing are created.

For a quick hardening of the thermoplastic protective tubular casing, the product is cooled by a liquid coolant (mainly water). This can be carried out while the long-dimensioned tube with the foaming insulator and the protective tubular casing is moved through an area where the liquid coolant is sprayed. As an embodiment, the tube with the cover can be placed into a tub with liquid coolant, also a forced air flow can be used. If a thermoreactive protective cover is used, it is heated for quick hardening. Subsequently the foaming thermally insulating material is vulcanised. Usually several hours are necessary to vulcanise it. The vulcanisation process can be accelerated by heating.

The shortcomings of the most pertinent prior art consist in the fact that it provides for the formation of an outer protective tubular casing without forming a relief in the shape of a helical surface, and also the difficulty of simultaneously maintaining a high temperature of the compound for the protective tubular casing and room temperature for the foaming thermally insulating material (this is required to prevent premature foaming).

### Disclosure of the invention

The most pertinent prior art and the method according to the invention have the following features in common:
- the working tube is supplied through an extrusion head for melting the polymeric materials,
- the outer protective tubular casing of polymeric material is extruded and shaped, placing it coaxially to the working tube,
- simultaneously the foaming material is supplied into the cavity between the working tube and the outer protective tubular casing, which forms the layer of thermal insulation in the inner cavity between the outer protective tubular casing and the working tube after hardening.

The technical problem to be solved by the invention is to provide stability of the one-step continuous production of flexible thermally insulating tubes to increase the quality of the obtained products, of the manufacturing of the tubes with a helical (crimped) surface, due to which the thermally insulated tube obtains additional flexibility and elasticity, which renders it possible to use the pipes manufactured from it without utilising immobile supports and compensating devices in trenchless installation and also provides a low level of temperature losses of the heat carrier. The features distinguishing the method for manufacturing a thermally insulated flexible tube according to the invention from the most pertinent prior art, which provide a solution to the problem underlying the invention, are defined in claim 1.

An outer protective tubular casing of polymeric materials (hereafter called tubular casing) is extruded by a head with an angular flow of the melt, and is shaped in a rotating calibrating device to form a helical (crimped) surface thereon, and is thermally stabilised in a cooling tub.

The foaming reaction materials which evenly fill the cavity between the tubular casing and the working tube, where the process of forming and stabilising the foam occurs, are fed into the intertubular space (between the working tube and the tubular casing) by a high-precision filling device with a conditioning system.

The two-channel or multichannel conditioning system combines several functions, namely:
- to facilitate the maintenance of a constant temperature;
- to facilitate the stability and controllability of the foaming process through the possibility to control the coolant circulation process;
- to facilitate the operability of the line in the event of a "clogging" of the component feeding channel with a switchover to a free channel for continuous production.

Through adhesion occurring at the boundary of the materials, a single, inseparable, flexible thermally insulated tube with a helical (crimped) surface and highly thermally insulating properties is formed.

The method for manufacturing a flexible thermally insulating tube according to the invention facilitates the stability of the foaming process and, due to this, the production of a high-quality product, wherein the outer protective tubular casing has a helical (crimped) surface, the shaping of which is carried out by a rotating calibrating device, which renders it possible to improve the exploitation properties of the finished product.

This surface shape of the protective tubular casing of polymeric materials reduces the stress level when the finished product is wound onto the drum and also reduces the level of internal stresses in the exploitation process of the finished flexible thermally insulating tube.

The substitution of the expensive corrugator by a rotating calibrating device shaping the tubular casing as a helical surface renders it possible to simplify the technical process, to reduce the labour and manufacturing costs necessary for obtaining the products, and also reduces the energy demand of the technical process as well as the weight of the finished products.

The analysis of the prior art showed that the formation of a helical surface on an outer protective tubular casing of polymeric materials is known from RU 2293247 and EP 2060843. However, this shape of the outer protective tubular casing is obtained by more complicated methods.

EP 2060843 pertains to a guide tube wherein an inner tube is arranged. The guide tube is adjusted axially, and its position is controlled by a device which tracks the centre position of the inner tube and sends corrective signals if necessary. A foil is supplied from a reel and is arranged around the inner tube concentrically with it, forming a sleeve with a glued or welded lateral seam. A foaming mixture based on polyurethane or polyethylene is fed into the formed sleeve. The tube enclosed by the foil is introduced into a corrugator, and an instrument forms corresponding recesses resembling half-waves in shape. The tube with the half-wave shaped recesses on the surface exits the corrugator. By means of extrusion an outer casing of plastics is applied onto the tube, which casing fills up under the influence of the low pressure of the recess in the shape of a half-wave. The outer casing firmly attaches to the foil in the extrusion process due to the high temperature. In accordance with the described process the helical (half-wave shaped) surface is received by the corrugator which has a half-wave shaped or half-crimped working surface in its working instrument (moulds). This method is a development of the most pertinent prior art EP 0897788 described above, wherein the shaping of the insulating materials is also carried out in a corrugator, the only difference being the shape of the surface of the working instrument, a helix (spiral) according to EP 2060843 or an annular shape according to EP 0897788.

Unlike in EP 2060843, in the method according to the invention first the outer helical surface is formed and cooled down, and subsequently the reaction materials for forming the layer of thermal insulation are applied. The existing equipment and technical preconditions allow to do this simultaneously, the basic equipment used being practically the same as in the production lines for cylindrically shaped tubes known from the prior art.

RU 2293247 describes a method for manufacturing a thermally insulating tube, characterised in that a casing of punching/drawing steel is shaped in the form of a tube around an inner tube (or inner tubes), a plastic foil is applied in motion on said casing in a longitudinal direction, and its longitudinal edges are welded or glued, a foaming plastic compound is fed into the gap between the inner tube or tubes and the polymer foil or the punching/drawing steel casing, a braided strap is wound helically on the plastic foil, the plastic foil is formed between the loops of the braided strap through the impact of the pressure of the foaming plastic in the form of an outward-pointing bulge, and finally the outer cover of thermoplastic is applied by extrusion, wherein the sections between the bulges are filled up in such a way that the outer cover obtains a helical wave-shape. According to RU 2293247, the foam is formed in the annular gap between the inner tube and the casing of punching/drawing steel through apertures in the casing of punching/drawing steel, and subsequently the obtained bulges are covered by extrusion, that is, first the foaming materials are supplied, and thereafter the outer cover is applied.

According to RU 2293247 and EP 2060843, the formation of the helical relief on the outer tubular casing is carried out in two steps: First the layer of thermal insulation is formed, and only thereafter is the outer layer applied. In the method according to the invention, first the outer tubular casing is formed, and thereafter the layer of thermal insulation. This principally distinguishes the method according to the invention from those known from the prior art.

A feature of the method according to the invention is also the fact that in its implementation a two-channel or multichannel conditioning system is used, which simultaneously fulfils the function of a guiding device for the device for feeding and injecting the foaming thermally insulating materials. Several channels are required to provide a continuous operation in the event of failure ("clogging") of one of the channels. The tubes forming the channels of the device for feeding and mixing the foaming thermally insulating materials are made of a material with low surface activity.

The conditioning system maintains a constant temperature of the reaction material while it flows through the channels to the place of injection to prevent a premature reaction, and safeguards the stability of the foaming process and its controllability (the temperature and the amount of coolant of the conditioning system can be regulated).

### Brief description of the drawings

The invention is explained by the drawings, which show:
- Fig. 1:: A production line of the thermally insulating flexible tube, general view.
- Fig. 2:: The same, top view.
- Fig. 3:: The thermally insulating flexible tube.
- Fig. 4:: An embodiment of the thermally insulating flexible tube with a working tube of polymeric material.
- Fig. 5:: An embodiment of the thermally insulating flexible tube with a working tube of metal.

### Implementation of the invention

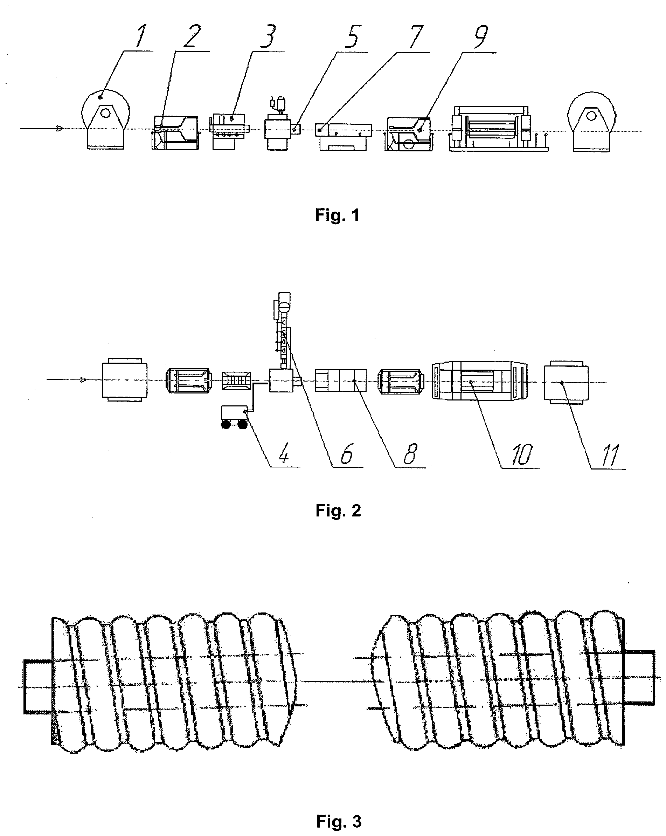

The production line of the thermally insulating flexible tube (Figs. 1 and 2) implementing the method according to the invention, comprises successively arranged elements which the working tube passes: An unwinding device for supplying the working tube 1, a straightening device 2 with a pre-heating system, a guiding device 3 for positioning the working tube, a high-precision filling unit 4 provided for producing systems of foaming plastics and arranged adjacent to an extrusion head 5, an extruder 6 facilitating the melting, homogenisation and feeding of the polymeric material of the outer tubular casing through the extrusion head 5, a rotating calibrating device 7 for forming the helical shape of the outer tubular casing, placed in a cooling tub 8, a pulling device 9, a cutting device 10 and a winding device 11 for the finished products.

The arrow indicates the supply of the working tube if it is supplied without using the unwinding device 1, directly from its production line.

The extrusion head 5 of the extruder 6 is a removable profiling instrument giving the polymer melt exiting the working cylinder of the extruder 6 the required shape, comprises places divided into sections for individual heating units, wherein the inner cavity of the extrusion head serves as the basis for the installation of the device for feeding and mixing (injecting) with a conditioning system.

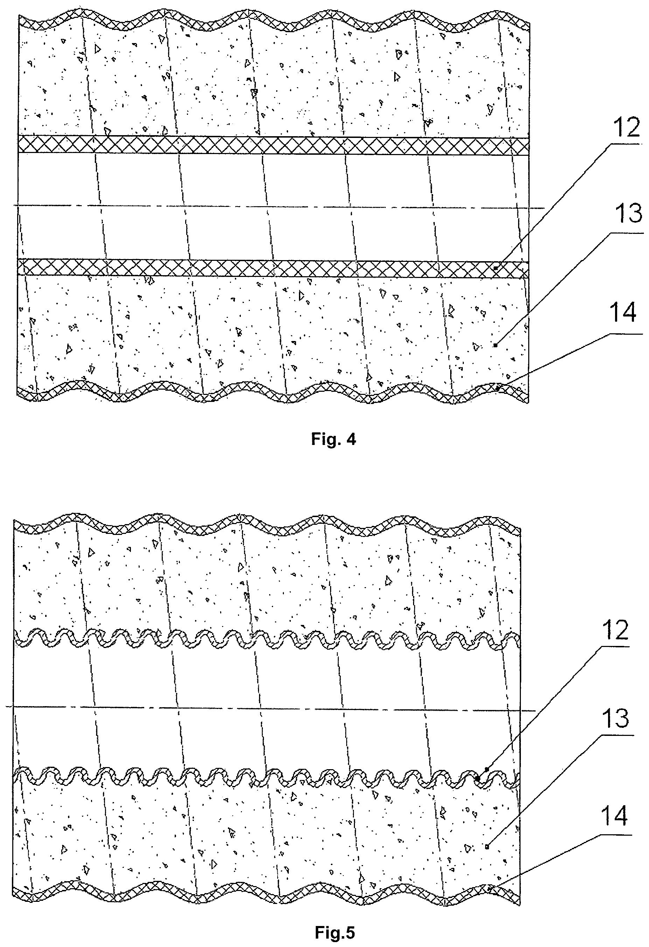

Fig. 3 schematically shows a general view of the thermally insulating flexible tube to be manufactured. Figs. 4 and 5 show a sectional view of the thermally insulating flexible tube, showing: the working tube 12, the layer of thermal insulation 13 (of foaming thermally insulating material) and the tubular casing 14 of helical shape.

The method of manufacturing the thermally insulating flexible tube is carried out through the operation of the line and consists of the following.

The working tube 12 is supplied from a drum of the unwinding device 1 of the line or is manufactured simultaneously with the process of manufacturing the thermally insulating tube and is supplied to the line without intermediate winding. Before the layer of thermal insulation is applied onto the working tube 12, it is preliminarily straightened and heated in the straightening device 2, which is required for improving the adhesion between the materials, the working tube is positioned in the guiding device 3 and subsequently moved through the extrusion head 5, while the polymeric materials are applied laterally.

The working tube 12 can be made of different durable flexible materials, for instance of polymers (Fig. 4) or metal (Fig. 5). There can be several working tubes within the outer tubular casing.

The outer protective tubular casing 14 of polymeric materials is extruded coaxially to the working tube 12 and is formed in the rotating calibrating device 7 to give it a helical shape. This geometry of the half-finished tube, as indicated above, reduces the internal stresses when the finished product is wound on the drum of the winding device 11, and also during exploitation of the finished thermally insulating flexible tube.

In the process of continuous supply of the working tube 12 through the extrusion head 5 with lateral supply of the polymeric materials, which extrudes the outer tubular casing, while the rotating calibrating device 7 forms the tubular casing, the foaming thermally insulating material, which evenly fills the inner cavity of the tubular casing 14, forming the layer of thermal insulation 13, is fed into the thermally stabilised (cooled) cavity between the working (inner) tube 12 and the helical (crimped) surface of the outer tubular casing 14 with the aid of the high-precision filling device 3.

In the cavity between the working (inner) tube 12 and the helical (crimped) wall of the outer tubular casing 14 the conditioning system is arranged, the coil of which cools the feeding channel for the foaming thermally insulating material and also the space around the coil.

The conditioning system consists of two or more channel assemblies (corresponding to the number of channels of the device for feeding and mixing (injecting) the foaming thermally insulating materials) and facilitates the maintenance of a constant temperature, the stability of the foaming process and its controllability. The maintenance of the required temperature by the conditioning system is carried out by circulating the coolant (for instance water) along the coil surrounding the tubes forming the channels of the device for feeding the foaming thermally insulating materials. The coil cools said tube, inside which the components of the foaming materials are arranged, and at the same time is the guide and support device for it. The tubes forming the channels of the device for feeding and mixing the foaming thermally insulating materials are made of a material with low surface activity. The reaction materials, which are additionally mixed by the layers in the process of progressing along the tubes, are fed through the channel.

The feeding and mixing (injecting) using two or more channels (tubes) facilitates the operability of the line in the event of a "clogging" of the channel for feeding the foaming materials through switching over to a free channel. In the event of a "clogging" of the channel for feeding components of the foaming thermally insulating materials it switches to another channel and facilitates the continuity of the technical process of manufacturing the thermally insulating tube.

The conditioning system with the device for supplying and mixing the foaming thermally insulating materials is arranged in the intertubular space between the working tube and the outer tubular casing to be extruded and shaped to a helical surface, and is attached to the extrusion head. In this cavity an additional supporting and centering device for the working tube can be positioned.

Thereafter the obtained product is cooled in the cooling tub 8 filled with coolant, for instance water.

The feeding of the foaming thermally insulating materials by the high-precision filling unit 4 is synchronised with the supply of the working tube 12 and the extrusion process, which offers the possibility to obtain a controllably distributed layer of thermal insulation of even density.

The device for feeding and mixing (injecting) the foaming thermally insulating materials by the high-precision filling unit 4 comprises its own conditioning system.

With the help of a pulling device 9 the flexible thermally insulating tube is supplied into a cutting device 10, in which it is cut into regular sections, the finished products are wound onto the drum of the winding device 11 and packed.

## Claims

1. Method for manufacturing a thermally insulated flexible tube consisting of a working tube (12), a layer of thermal insulation (13) and an outer protective tubular casing (14), including the following:
first the outer protective tubular casing (14) is extruded coaxially to the working tube (12) by means of an extrusion head (5) with an angular flow of the melt of polymeric materials,
and thereafter a foaming material is fed into the inner cavity between the outer protective tubular casing (14) and the working tube (12), said foaming material forming a layer of thermal insulation (13) between the outer protective tubular casing (14) and the working tube (12), wherein the method is realized using a production line of the thermally insulated flexible tube which production line comprises the following elements:
- an unwinding device (1) for supplying the working tube (12),
- a straightening device (2) with a pre-heating system,
- a guiding device (3) for positioning the working tube (12),
- a high-precision filling unit (4) arranged adjacent to the extrusion head (5),
- an extruder (6),
- a rotating calibrating device (7), placed in a cooling tub (8),
- a pulling device (9),
- a cutting device (10) and
- a winding device (11) for the finished thermally insulated flexible tube,
wherein the outer protective tubular casing (14) is manufactured with a helical surface by means of the rotating calibrating device (7) and is thermally stabilized in the cooling tub (8), subsequently the foaming thermally insulating material for forming the layer of thermal insulation (13) is fed into the thermally stabilised cavity between the working tube (12) and the helical surface of the outer protective tubular casing (14) with the aid of the high-precision filling unit (4), while the temperature of the foaming thermally insulating material supplied is maintained by means of a conditioning system which cools the channels of the device for feeding and mixing the foaming thermally insulating materials and at the same time acts as an element for the positioning of said channels,
wherein the conditioning system is arranged in a cavity between the working tube (12) and the helical wall of the outer protective tubular casing (14),
wherein a coil of the conditioning system cools the feeding channel for the foaming thermally insulating material and also a space around the coil.

2. Method according to claim 1, wherein the feeding of the foaming thermally insulating material through the filling unit (4) is synchronised with the supply of the working tube (12) and the extrusion process to obtain a layer of thermal insulation (13) of even density.

3. Method according to claim 1, wherein the conditioning system is attached to the extrusion head (5).

## Patentansprüche

1. Verfahren zur Herstellung eines wärmeisolierten flexiblen Schlauchs, bestehend aus einem Arbeitsschlauch (12), einer Wärmeisolierungsschicht (13) und einem äußeren schlauchförmigen Schutzgehäuse (14), Folgendes umfassend:
zuerst wird das äußere schlauchförmige Schutzgehäuse (14) koaxial zu dem Arbeitsschlauch (12) mittels eines Extrusionskopfs (5) bei schrägem Fluss der Schmelze der Polymermaterialien extrudiert,
und anschließend wird ein Schaummaterial in den inneren Hohlraum zwischen dem äußeren schlauchförmigen Schutzgehäuse (14) und dem Arbeitsschlauch (12) eingeführt, wobei das Schaummaterial eine Wärmeisolierungsschicht (13) zwischen dem äußeren schlauchförmigen Schutzgehäuse (14) und dem Arbeitsschlauch (12) bildet,
wobei das Verfahren unter Verwendung einer Fertigungsstraße des wärmeisolierten flexiblen Schlauchs ausgeführt wird, die die folgenden Elemente umfasst:
- eine Abwicklungseinrichtung (1) für die Zuführung des Arbeitsschlauchs (12),
- eine Geraderichtungseinrichtung (2) mit einem Vorheizsystem,
- eine Führungseinrichtung (3) zur Positionierung des Arbeitsschlauchs (12),
- eine Hochpräzisions-Fülleinheit (4), die angrenzend an den Extrusionskopf (5) angeordnet ist,
- einen Extruder (6),
- eine rotierende Kalibrierungseinrichtung (7), die in einer Kühlwanne (8) angeordnet ist,
- eine Zieheinrichtung (9),
- eine Schneideinrichtung (10) und
- eine Aufwicklungseinrichtung (11) für den fertigen wärmeisolierten flexiblen Schlauch,
wobei das äußere schlauchförmige Schutzgehäuse (14) mittels der rotierenden Kalibrierungseinrichtung (7) mit schraubenförmiger Oberfläche hergestellt wird und in der Kühlwanne (8) thermisch stabilisiert wird, anschließend das wärmeisolierende Schaummaterial zum Ausbilden der Wärmeisolierungsschicht (13) in den thermisch stabilisierten Hohlraum zwischen dem Arbeitsschlauch (12) und der schraubenförmigen Oberfläche des äußeren schlauchförmigen Schutzgehäuses (14) mit Hilfe der Hochpräzisions-Fülleinheit (4) eingeführt wird, während die Temperatur des zugeführten wärmeisolierenden Schaummaterials mittels eines Klimasystems aufrechterhalten wird, das die Kanäle der Einrichtung zum Zuführen und Mischen der wärmeisolierenden Schaummaterialien kühlt und gleichzeitig als Element zur Positionierung dieser Kanäle wirkt, wobei das Klimasystem in einem Hohlraum zwischen dem Arbeitsschlauch (12) und der schraubenförmigen Wand des äußeren schlauchförmigen Schutzgehäuses (14) angeordnet ist, wobei eine Spule des Klimasystems den Zufuhrkanal für das wärmeisolierende Schaummaterial sowie einen Raum um die Spule herum kühlt.

2. Verfahren nach Anspruch 1, wobei die Zufuhr des wärmeisolierenden Schaummaterials durch die Fülleinheit (4) mit der Zuführung des Arbeitsschlauchs (12) und dem Extrusionsvorgang synchronisiert ist, um eine Wärmeisolierungsschicht (13) von gleichmäßiger Dichte zu erzielen.

3. Verfahren nach Anspruch 1, wobei das Klimasystem am dem Extrusionskopf (5) angebracht ist.

## Revendications

1. Procédé de fabrication d'un tube flexible à isolation thermique composé d'un tube de travail (12), d'une couche d'isolation thermique (13) et d'un corps tubulaire (14) de protection extérieure, sachant que:
premièrement, le corps tubulaire (14) de protection extérieure est extrudé coaxialement vers le tube de travail (12) au moyen d'une tête d'extrusion (5) à un angle par rapport au sens d'écoulement de la masse fondue de matière polymère,
et qu'ensuite une matière en mousse est amenée dans la cavité intérieure entre le corps tubulaire (14) de protection extérieure et le tube de travail (12), ladite matière en mousse formant une couche d'isolation thermique (13) entre le corps tubulaire (14) de protection extérieure et le tube de travail (12),
dans lequel
le procédé est réalisé à l'aide d'une ligne de production du tube flexible à isolation thermique dont la ligne de production comprend les éléments suivants:
- un dispositif de déroulage (1) pour alimenter le tube de travail (12),
- un dispositif de redressage (2) avec un système de préchauffage,
- un dispositif de guidage (3) pour positionner le tube de travail (12),
- une unité de remplissage de haute précision (4) disposée à côté de la tête d'extrusion (5),
- une extrudeuse (6),
- un dispositif d'étalonnage rotatif (7) placé dans un tube de refroidissement (8),
- un dispositif de tirage (9),
- un dispositif de découpe (10) et
- un dispositif d'enroulage (11) pour le tube flexible à isolation thermique terminé, dans lequel le corps tubulaire (14) de protection extérieure est produit avec une surface hélicoïdale au moyen du dispositif d'étalonnage rotatif (7) et est stabilisé dans le tube de refroidissement (8), ensuite la matière thermique isolante en mousse pour former la couche d'isolation thermique (13) est amenée dans la cavité stabilisée thermiquement entre le tube de travail (12) et la surface hélicoïdale du corps tubulaire (14) de protection extérieure à l'aide de l'unité de remplissage (4) à haute précision tandis que la température de la matière thermique isolante en mousse fournie est maintenue à l'aide d'un système de conditionnement qui refroidit les canaux du dispositif pour alimenter et mélanger les matières thermiques isolantes en mousse et qui agit au même moment comme un élément pour positionner lesdits canaux,
dans lequel le système de conditionnement est disposé dans une cavité entre le tube de travail (12) et la paroi hélicoïdale du corps tubulaire (14) de protection extérieure,
dans lequel une bobine du système de conditionnement rafraîchit le canal d'alimentation pour la matière thermique isolante en mousse et aussi un espace autour de la bobine.

2. Procédé selon la revendication 1, dans lequel l'alimentation de la matière thermique isolante en mousse traversant l'unité de remplissage (4) est synchronisée avec l'alimentation du tube de travail (12) et le procédé d'extrusion pour obtenir une couche d'isolation thermique (13) d'une densité homogène.

3. Procédé selon la revendication 1, dans lequel le système de conditionnement est fixé à la tête d'extrusion (5).
